(19) Europäisches Patentamt
European Patent Office
Office européen des brevets

(11) EP 0 932 280 B1

(12) **EUROPEAN PATENT SPECIFICATION**

(45) Date of publication and mention
of the grant of the patent:
**30.11.2005 Bulletin 2005/48**

(51) Int Cl.[7]: **H04L 12/56**, H04Q 11/04,
H04N 7/24, H04L 29/06

(21) Application number: **98107129.3**

(22) Date of filing: **20.04.1998**

(54) **Dynamic network bandwidth allocation for multimedia applications with soft quality-of-service requirements**

Dynamische Netzbandbreitenzuweisung für Multimedia-Anwendungen mit weichen Dienstqualitätsanforderungen

Allocation dynamique de largeur de bande pour applications multimédia aux besoins non-stricts de qualité de service

(84) Designated Contracting States:
**DE GB**

(30) Priority: **21.01.1998 US 10488**
**13.03.1998 JP 6355198**

(43) Date of publication of application:
**28.07.1999 Bulletin 1999/30**

(60) Divisional application:
**03011745.1 / 1 345 367**
**03011746.9 / 1 339 194**
**03011747.7 / 1 345 368**
**03011748.5 / 1 345 369**

(73) Proprietor: **Juniper Networks, Inc.**
**Sunnyvale, CA 94089-1206 (US)**

(72) Inventors:
• **Reininger, Daniel**
**Princeton, NJ 08540 (US)**
• **Izmailov, Rauf**
**Princeton, NJ 08540 (US)**

(74) Representative: **Holt, Daniel Richard**
**Mewburn Ellis LLP**
**York House**
**23 Kingsway**
**London WC2B 6HP (GB)**

• **REININGER D ET AL: "Scalable QOS control for VBR video servers" MULTIMEDIA SIGNAL PROCESSING, 1997., IEEE FIRST WORKSHOP ON PRINCETON, NJ, USA 23-25 JUNE 1997, NEW YORK, NY, USA,IEEE, US, 23 June 1997 (1997-06-23), pages 570-575, XP010233883 ISBN: 0-7803-3780-8**
• **REININGER D J ET AL: "BANDWIDTH RENEGOTIATION FOR VBR VIDEO OVER ATM NETWORKS" IEEE JOURNAL ON SELECTED AREAS IN COMMUNICATIONS, IEEE INC. NEW YORK, US, vol. 14, no. 6, 1 August 1996 (1996-08-01), pages 1076-1085, XP000620594 ISSN: 0733-8716**
• **KANAKIA H ET AL: "AN ADAPTIVE CONGESTION CONTROL SCHEME FOR REAL-TIME PACKET VIDEO TRANSPORT" COMPUTER COMMUNICATIONS REVIEW, ASSOCIATION FOR COMPUTING MACHINERY. NEW YORK, US, vol. 23, no. 4, 13 September 1993 (1993-09-13), pages 20-31, XP000195710 ISSN: 0146-4833**
• **ABDELZAHER T F ET AL: "QoS negotiation in real-time systems and its application to automated flight control" REAL-TIME TECHNOLOGY AND APPLICATIONS SYMPOSIUM, 1997. PROCEEDINGS., THIRD IEEE MONTREAL, QUE., CANADA 9-11 JUNE 1997, LOS ALAMITOS, CA, USA,IEEE COMPUT. SOC, US, 9 June 1997 (1997-06-09), pages 228-238, XP010232482 ISBN: 0-8186-8016-4**

(56) References cited:
**EP-A- 0 658 999          WO-A-96/27965**
**WO-A-97/01895          WO-A-97/22224**
**WO-A-97/31456          US-A- 5 675 384**
**US-A- 5 701 465**

EP 0 932 280 B1

- MANOLESSOS Y I ET AL: "Dynamic application scaling as a means for QoS management" COMPUTER COMMUNICATIONS, ELSEVIER SCIENCE PUBLISHERS BV, AMSTERDAM, NL, vol. 20, no. 5, 1 July 1997 (1997-07-01), pages 393-405, XP004126694 ISSN: 0140-3664
- MUKHERJEE S ET AL: "An adaptive connection admission control policy for VBRservice class" INFOCOM '98. SEVENTEENTH ANNUAL JOINT CONFERENCE OF THE IEEE COMPUTER AND COMMUNICATIONS SOCIETIES. PROCEEDINGS. IEEE SAN FRANCISCO, CA, USA 29 MARCH-2 APRIL 1998, NEW YORK, NY, USA,IEEE, US, 29 March 1998 (1998-03-29), pages 849-857, XP010270413 ISBN: 0-7803-4383-2
- VENKATASUBRAMANIAN N ET AL: "AN INTEGRATED METRIC FOR VIDEO QOS" PROCEEDINGS ACM MULTIMEDIA 97. SEATTLE, NOV. 9 - 13, 1997, READING, ADDISON WESLEY, US, vol. CONF. 5, 1997, pages 371-380, XP000857162 ISBN: 0-201-32232-3
- FULP E W ET AL: "Paying for QoS: an optimal distributed algorithm for pricing network resources" QUALITY OF SERVICE, 1998. (IWQOS 98). 1998 SIXTH INTERNATIONAL WORKSHOP ON NAPA, CA, USA 18-20 MAY 1998, NEW YORK, NY, USA,IEEE, US, 18 May 1998 (1998-05-18), pages 75-84, XP010280482 ISBN: 0-7803-4482-0
- REININGER D ET AL: "VBR MPEG VIDEO CODING WITH DYNAMIC BANDWIDTH RENEGOTIATION" COMMUNICATIONS - GATEWAY TO GLOBALIZATION. PROCEEDINGS OF THE CONFERENCE ON COMMUNICATIONS. SEATTLE, JUNE 18 - 22, 1995, PROCEEDINGS OF THE CONFERENCE ON COMMUNICATIONS (ICC), NEW YORK, IEEE, US, vol. 3, 18 June 1995 (1995-06-18), pages 1773-1777, XP000535052 ISBN: 0-7803-2487-0

**Description**

BACKGROUND OF THE INVENTION

FIELD OF THE INVENTION

This invention relates to quality of service (QoS) for network communication. Specifically a new form of QoS, called soft-QoS, is introduced to bridge the gap currently existing between the efficient provision of network-level QoS and the requirements of multimedia applications. This invention is embodied in a network system that uses soft-QoS, in a method for utilizing soft-QoS and a computer program product that enables a network to use soft-QoS.

RELATED WORK

Presently, communication over a network has become widely prevalent. Connections that use such a network require a guarantee of a certain quality of service. Quality of service (QoS) offered by a network connection is measured in terms of QoS parameters. QoS parameters, in conventional systems is expressed in statistical terms such as cell loss rate, delay jitter and cell transfer delay.

In order to provide guarantee of a certain QoS, a network needs to make long-term assumptions on the statistical characteristics of its traffic. But then, network traffic is comprised of various connections with their own respective characteristics. Additionally, assumptions made by a network regarding a specific connection must be valid for its entire duration. Above mentioned, statistical characteristics are obtained in conventional systems using methods including stochastic modeling or statistical analysis of empirical data.

But then, traffic profiles of an interactive multimedia connections is generally unknown when it is setup. Therefore, above mentioned long-term statistical representations are unsuitable for such interactive multimedia connections. Specifically, parameters used in long-term statistical representations do not represent the specific QoS requirements of multimedia applications. It is generally accepted that distributed multimedia applications require a network service that can match the dynamic and heterogeneous bandwidth requirements that are typical of such applications.

Moreover, a network has to rely on conservative traffic assumptions to guarantee a certain QoS. Such reliance on conservative assumptions lead to reservation of network capacity far in excess of what is required. Consequently, there is poor network utilization.

It should be noted that problem of poor network utilization due to capacity over-reservation has been addressed by practitioners in this field using VBR[+]. See D. Reininger, G. Ramamurthy and D. Raychaudhuri, "VBR MPEG Video Coding with Dynamic Bandwidth Renegotiation," Proceedings of ICC (June 1995). VBR* is a network service class, using which a connection can renegotiate its bandwidth while the connection is in progress.

Using this methodology overall utilization of a network is improved since bandwidth can be dynamically allocated and reallocated during a connection. See D. Reininger, W. Luo, "Statistical Multiplexing of VBR* video." Proceedings of SPIE International Symposium on Voice, Video & Data Communications. Dallas, Texas (Nov. 1997).

But then, formulae used in connection bandwidth calculation involve QoS parameters like equivalent bandwidth. Consequently reallocating bandwidth changes the QoS of a connection. In such a case, procedures used for bandwidth reallocation, as in VBR*, have to ensure that new QoS parameters satisfy the original QoS requirements of a connection. In order to realize this objective, the authors use a concept of "QoS satisfaction".

Similar mechanisms are known from "Scalable QoS Control for VBR Video Servers" from D. Reininger et al., IEEE Multimedia Signal Processing Workshop, Princeton, NJ, 1997.

Methods known conventionally are based on representing QoS satisfaction as a "hard" binary ("yes/no") parameter. If, for example, the delivered (or estimated) cell loss ratio is larger than a required cell loss ratio, the connection is deemed unsatisfied. This result is notwithstanding however small the discrepancy between the required and delivered cell loss ratio is.

Taking the above into consideration, it is thus clear that using binary parameters lead to an overgeneralization of QoS satisfaction. This has been partially rectified in conventional systems by using two sets of QoS parameters at the setup phase, they being desired QoS and acceptable QoS.

A user connection and a network engage in a sequence of QoS negotiations using the above mentioned two parameters. In such a case, the user connection is assigned acceptable QoS parameters which may be different from the desired QoS originally requested by it. Although this methodology presents an improvement over the earlier mentioned binary characterization of QoS satisfaction, providing a desired and acceptable QoS does not lead to an adequate mechanism to handle QoS that fall between the two. It is amply clear that the region between the QoS boundaries, desired and acceptable, is not used effectively.

Also, conventional systems do not have a QoS satisfaction scheme that can be employed while a connection is in progress. Besides, it is not possible for a network to achieve high utilization while maintaining hard-bound long-term QoS guarantees under the requirements imposed by distributed multimedia-applications.

Therefore, at least the following problems exist in conventional network systems.

- • "hard" QoS is inadequate for multimedia traffic.
- • "hard" QoS leads to unsatisfactory utilization of networks.
- • Conventional QoS satisfaction schemes can not be modified while a connection is in process.
- • Conventional QoS satisfaction schemes do not provide quality-fair resource allocation since they use equal bandwidth allocation.

## SUMMARY OF THE INVENTION

It is an objective of this invention to solve the above identified problems in network systems. Specifically, it is an objective of this invention to provide a soft-QoS for balancing network utilization and application-level QoS in distributed multimedia systems.

It is another objective of this invention to use during congestion a soft-QoS for utilizing the tolerance of an application to network bandwidth shortage. It is an objective of the present invention to represent soft-QoS by a satisfaction index and a softness profile.

In case of video transmission, satisfaction index is an indication of perceptual quality. For different multimedia applications, softness profile correlates the satisfaction index to the resulting bandwidth allocation during network congestion. For example, video applications exhibit a non-linear quality response to bit-rate changes. Scaling a video source reduces its bit-rate, but impacts the perceptual quality. While "soft" applications (such as teleconferencing or multimedia-on-demand browsing) can tolerate relatively large reductions in bit-rate, "hard" applications (such as video on-demand or medical applications) cannot tolerate bit-rate scaling without significantly degrading the application-level QoS. Softer applications are more robust to network congestion since they exhibit a slower decay in satisfaction index with increasing bandwidth shortage.

It is yet another objective of the present invention to use softness profiles of various applications in a network to balance bandwidth utilization and user satisfactions. It is yet another objective of this invention to enable softer applications to receive a favorably priced service for their added flexibility to the bandwidth allocation allowing networks to operate at more aggressive utilization regimes.

It is another objective of this invention to address the issues relating to QoS and expand the notion of QoS satisfaction beyond its current "hard" binary status.

Specifically satisfaction index is gradually scaled from "unsatisfied" to "satisfied". Satisfaction index represents the discrepancy, between the requested equivalent bandwidth and the allocated bandwidth during a network congestion. The exact relationship between the satisfaction index and the bandwidth of the connection is described by its softness profile. Softness profile specifies how satisfaction index decreases if only a portion of the requested bandwidth can be actually allocated by the network. If a small bandwidth deficit causes sharp decrease of the satisfaction index, the corresponding softness profile is deemed "hard". "Softer" profiles correspond to cases, where bandwidth deficit cause the satisfaction index to decrease slower. Softness profile can be selected during setup and it can be changed while a session is in progress.

It is yet another objective of this invention to enable applications to choose a softness profile that best suits their needs. For example, video-on-demand (VoD) applications generally tolerate bit-rate regulations within a small dynamic range, (since rate control is achieved through quantizer control). Applications such as surveillance or teleconference may have a larger dynamic range for bit-rate control since video can be displayed over a range of frame-rates below the traditional 30 and 24 frames-per-second. Other multimedia applications may allow a larger range of bit-rate control by resolution scaling. In these examples, VoD applications are matched to a "harder" profile than the other, more adaptive multimedia applications.

It is yet another objective of the present invention to enable applications to choose appropriate softness profiles depending on the nature of the application. For example, users on wireless mobile terminals may select a "softer" profile for an application in order to reduce the connection's cost, while a "harder" profile may be selected when the same application is run on a wired desktop terminal. Thus, adaptive multimedia applications able to scale their video quality could specify their soft-QoS requirements dynamically to control the cost of a session.

In order to achieve the objectives noted above it is provided a distributed multimedia system having a soft quality of service support in accordance with the attached claims.

BRIEF DESCRIPTION OF THE DRAWINGS:

FIG. 1 shows an example of a satisfaction profile.

FIG. 2 shows a table presenting the critical bandwidth ratio for different MPEG-2 video application scenarios.

FIG. 3 shows a QoS API according to the present invention.

FIG. 4 shows a system model for a distributed multimedia system with soft-QoS support.

FIG. 5 depicts application QoS renegotiation across a network that uses ATM signalling.

FIG. 6 shows a preferred embodiment that uses IP and provides RSVP connections.

FIG. 7 shows a preferred embodiment that uses soft-QoS controllers over networks that use IP switching over ATM.

FIG. 8 shows an adaptive bandwidth allocation system model according to the present invention.

FIG. 9 shows a detailed description of an algorithmic implementation for a soft-QoS controller follows according to a preferred embodiment of the present invention.

FIG. 10 shows a bandwidth reallocation algorithm according to a preferred embodiment of the present invention.

FIG. 11 shows examples of the various steps in the core bandwidth allocation procedure.

FIG. 12 shows an admission control algorithm according to a preferred embodiment of the present invention.

FIG. 13 depicts a table showing the performance of the soft-QoS controller in terms of preselected metrics.

FIG. 14 shows the effect of network utilization on low satisfaction rate (LSR).

FIG. 15 shows the effect of network utilization on low satisfaction mean duration (LSMD).

FIG. 16 shows the effect of network utilization on the reallocation rate (RR).

FIG. 17 shows the effect of pruning threshold on reallocation signalling overhead (RSO).

FIG. 18 shows a table depicting the effect of pruning threshold on reallocation performance.

FIG. 19 shows a trade-off between reallocation signalling overhead (RSO) and low satisfaction rate (LSR).

FIG. 20 shows the effect of reallocation on minimum satisfaction index.

DESCRIPTION OF THE PREFERRED EMOBIDMENTS:

Referring to figures, the principles of the present invention is described. Herein, various features, merits and various embodiments of the present invention will be described for a better understanding of this invention. Experiments that show quantitatively the superior advantages of the present invention are also presented with an analysis of their results.

Principle of the invention:

Definition of Soft Quality of Service (QoS)

The present invention is featured by the concept of a soft-QoS which provides a smooth or flexible QoS and which is different from the concept of a usual hard QoS providing a fixed QoS. Specifically, the soft-QoS is representative of provision of sufficient network resources, such as a bandwidth, to accomplish acceptable application performance.

Softness profile is one of the parameters used in the present invention to specify soft-QoS. A clear understanding of the scope of this invention can be had only with a definition of softness profile. Softness profile is defined using two parameters: satisfaction index and bandwidth ratio. Satisfaction index is a measure of users' perception of quality. Bandwidth ratio is defined as ratio of the network bandwidth actually allocated to the bandwidth requested by the application. Softness profile is a function that correlates the satisfaction index of an application to its requested and allocated network bandwidths.

Herein, several ways of obtaining softness profiles are considered. Multimedia applications generally exhibit non-linear relationship between bit-rate and quality that can be used as one of the ways to specify softness profiles. This non-linear response is sometimes characterized empirically through perceptual, evaluation tests.

In case of video applications, studies have been conducted to assess the quality of various implementation of digital video services like high definition television (HDTV) and direct broadcasting services (DBS). Such a study of MPEG-2 video for television services is presented in J. G. Lourens, H. H. Malleson, and C. C. Theron, "Optimisation of bit-rates, for digitally compressed television services, as a function of acceptable picture quality and picture complexity", IEE Colloquium on Digitally Compressed TN by Satellite, 1995. This study presents extensive graphs correlating subjective picture quality assessment to various compression bit-rates. It also considers activity and complexity of the video material. From the correlations obtained using the above mentioned approach, softness profiles for video used in various application scenarios can be derived.

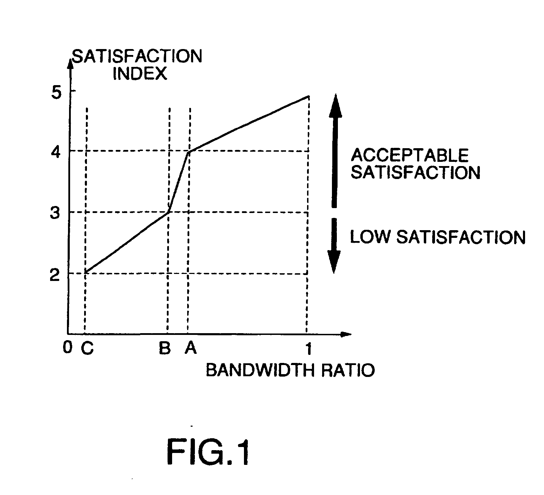

The softness profile is approximated by a piecewise linear "S-shaped" function, consisting of three linear segments. FIG. 1 depicts this function in the form of a graph of satisfaction index versus bandwidth ratio. Satisfaction index is shown to vary from 0 - 5 while the bandwidth ratio varies from 0 - 1. There arc three linear segments shown; C-B, B-A and A-1. The slope of each linear segment represents the rate at which video quality degrades (satisfaction index decreases) when the network allocates only a portion of the requested bandwidth: the steeper the slope, the "harder" the corresponding profile.

The satisfaction index is graded from 2 to 5 with a granularity G. Two operational regions are identified in the preferred embodiment: the range between 3 to 5 is considered an acceptable satisfaction region, while below 3 is a low satisfaction region.

Further, in the preferred embodiment, bandwidth ratio is graded from 0 to 1. The point indicated as B in FIG. 1 is called the critical bandwidth ratio since it separates the acceptable and low satisfaction regions.

The softness profile function S(r) (where r is the bandwidth ratio) according to the present invention is completely determined by three numbers A, B, C, where

$$1 \geq A > B > C \geq 0$$

and

S(1) = 5 (excellent), S(A) = 4 (very good), S(B) = 3 (good), S(C) = 2 (poor), S(0) = 0.

For a bandwidth ratio r between 0 and 1, the corresponding satisfaction index S(r) is calculated by the formulae:

$$
L = \begin{cases}
0 & \text{if } 0 \leq r \leq C, \\
1 & \text{if } C \leq r \leq B, \\
2 & \text{if } B \leq r \leq A, \\
3 & \text{if } A \leq r \leq 1,
\end{cases}
$$

$$
S(r) = \begin{cases}
2 & \text{if } L = 0, \\
(r - C) / (B - C) + 2 & \text{if } L = 1, \\
(r - B) / (A - B) + 3 & \text{if } L = 2, \\
(r - A) / (1 - A) + 4 & \text{if } L = 3,
\end{cases}
$$

Softness profile is also used for calculating the amount of bandwidth (bandwidth ratio r) required to obtain the desired satisfaction index s:

$$
L = \begin{cases}
0 & \text{if } 0 \leq s \leq 2, \\
1 & \text{if } 2 \leq s \leq 3, \\
2 & \text{if } 3 \leq s \leq 4, \\
3 & \text{if } 4 \leq s \leq 5,
\end{cases}
$$

$$
r(s) = \begin{cases}
C & \text{if } L = 0, \\
(s - 2) / (B - C) + C & \text{if } L = 1, \\
(s - 3) / (A - B) + B & \text{if } L = 2, \\
(s - 4) / (1 - A) + A & \text{if } L = 3,
\end{cases}
$$

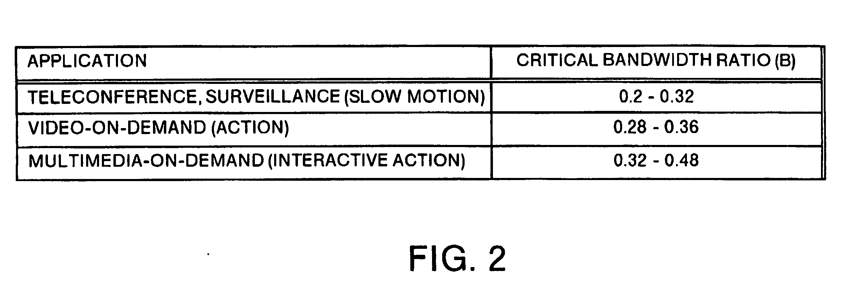

The present invention can also be practiced using further quantification of softness profile for different video applications. In a preferred embodiment softness profile characterization derived from studies detailed in J. G. Lourens, H. H. Malleson, and C. C. Theron, "Optimisation of bit-rates, for digitally compressed television services, as a function of acceptable picture quality and picture complexity", IEE Colloquium on Digitally Compressed TN by Satellite (1995) is used. In the above mentioned study a statistical model derived from empirical results obtained for MPEG-2 television applications show that A = 1.067 - B, C = 0.667 - B. FIG. 2 presents an application-dependent range for the critical bandwidth ratio, B.

Soft-Qos Controller for Multimedia Applications

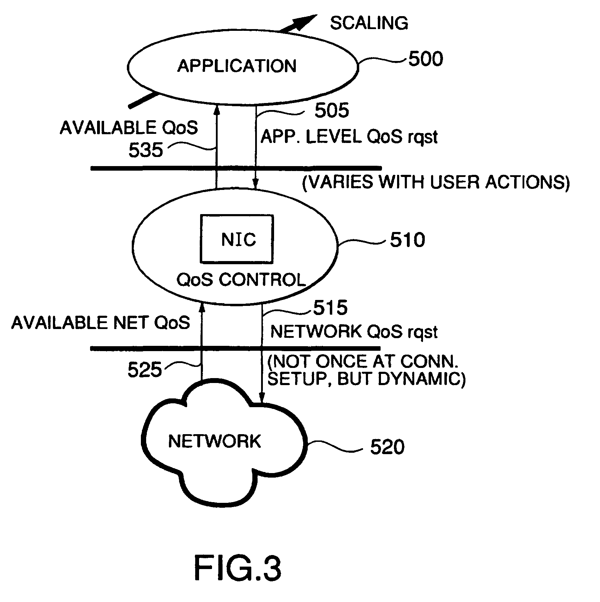

FIG. 3 shows a QoS request by an application according to an aspect of the present invention. An application 500 seeks additional bandwidth. Arrow 505 represents an application level QoS request. The format of this request varies with actions typical of the application. The request is received by a network interface card 510 which also performs QoS control. This card interprets the application QoS request and converts it into a network QoS request using 515. According to an important aspect of this invention it is to be noted that 515 is maintained as a dynamic link, and not just a one time setup event. The network 520 responds by providing available network QoS in 525, which is then provided to the application in 535.

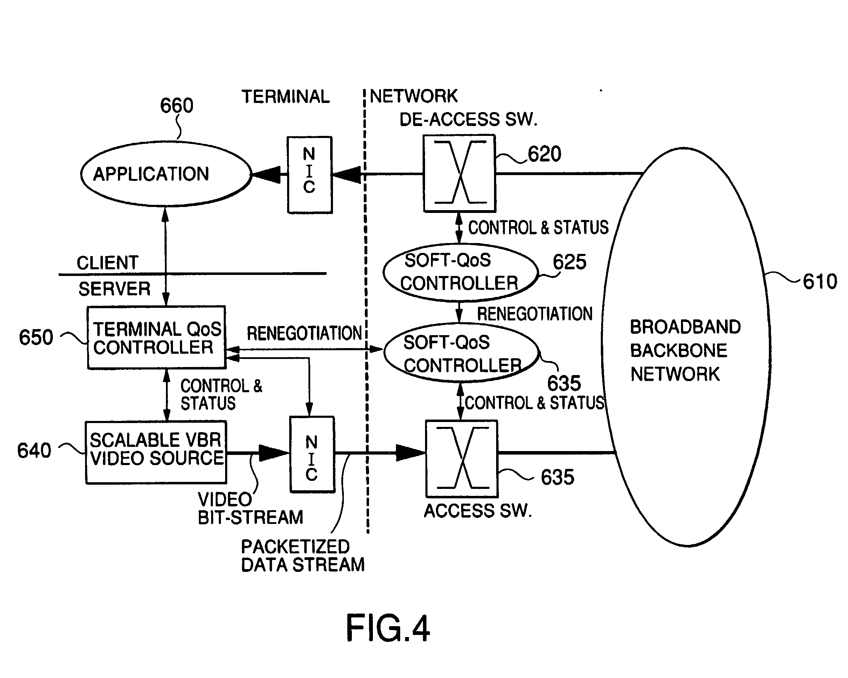

FIG. 4 shows an example of a system model for a distributed multimedia system with soft-QoS support according to the present invention. A video delivery application where a client terminal requests a video title from a remote server over a broadband backbone network 610 is considered as an example. At the connection setup, an application 660 requests the desired QoS from a server and a network. For video, the quality requested from the server is described in terms of frame-rate and frame-detail (given by a combination of spatial and frequency resolution). The quality requested from the network is a soft-QoS specification, characterized as a satisfaction index and a softness profile. While a connection is in progress, this application can renegotiate its QoS requirements.

At the server, the terminal QoS controller 650 computes and renegotiates the bit-rate necessary to maintain a desired target quality. The renegotiation requests are sent to soft-QoS controllers 625 and 635 on the network's switches through access networks using an access and deaccess software components 630 and 620.

While renegotiations are being processed, and during network congestion, a variable bit-rate (VBR) source 640 uses rate control to scale its bit-rate and quality to ensure that the generated traffic conforms to the allocated bandwidth.

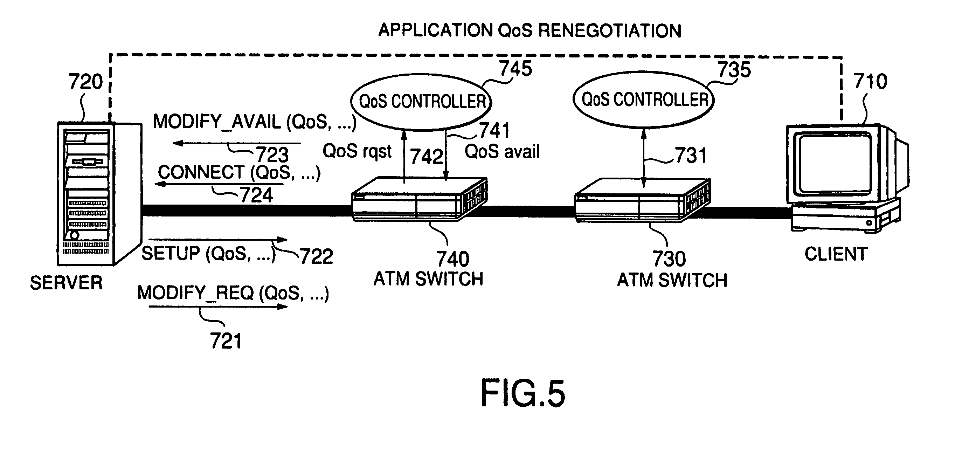

FIGs. 5 - 7 show conceptual implementation of systems detailing various network mechanisms for dynamic QoS support according to various preferred embodiments of the present invention.

FIG. 5 depicts application QoS renegotiation across a network that uses ATM signalling. Client 710 is connected to server 720 across an ATM network through ATM switches 730 and 740. Soft-QoS controllers 735 and 745 are connected to the ATM switches. Setup 722 and modification requests 721 are made by the server to the network. Newly established connections 724 and modification availability 723 are received by the server.

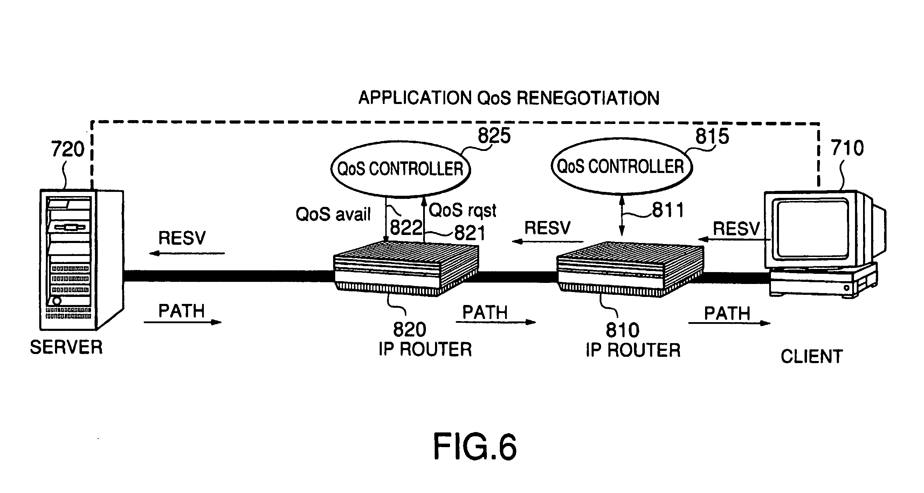

FIG. 6 shows a preferred embodiment that uses IP instead of ATM and provides RSVP connections. RSVP is a signalling mechanism protocol for quality of service provision. It follows the IETF standard quality of service provision. In this case, soft-QoS Controllers 815 and 825 are connected to IP Routers 810 and 820.

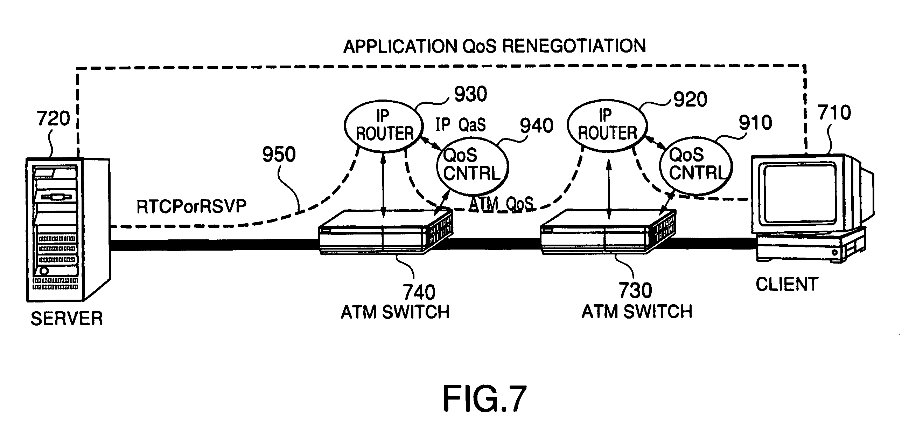

FIG. 7 shows a preferred embodiment that uses soft-QoS controllers over the relatively new technology of IP switching over ATM. In this case, QoS controllers 910 and 940 are connected to both IP routers 920 and 930 as well as ATM switches 730 and 740.

Each QoS controller illustrated in Figs. 5 to 7 may be rendered into a soft-QoS controller according to the present invention. In this event, such a soft-QoS controller can perform soft-QoS control operation in accordance with the present invention.

Structure of the soft-QoS controller

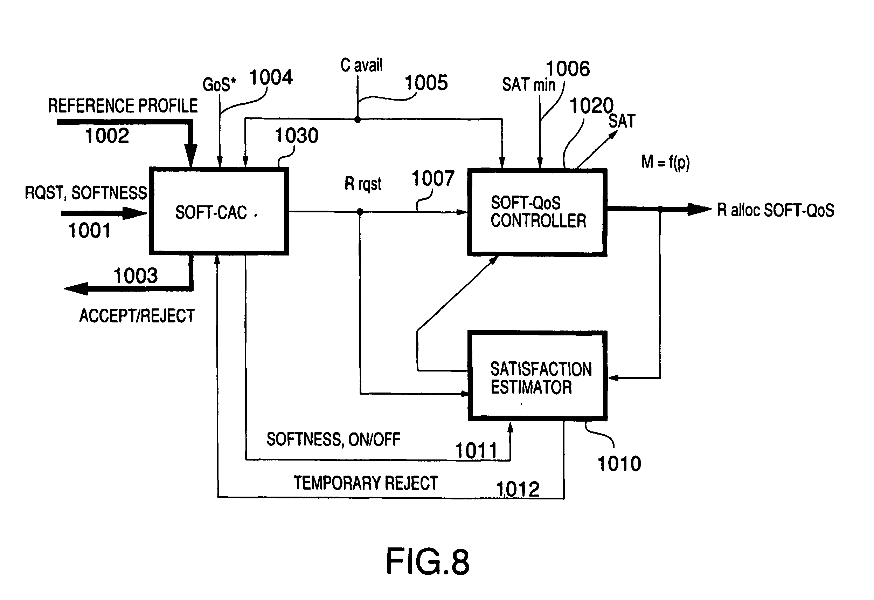

Referring to Fig. 8, description will be made about structure of the soft-QoS controller which is used at each node of the communication network. The illustrated soft-QoS controller is operable to adaptively allocate a bandwidth and comprises a satisfaction estimator 1010, a soft-QoS control module 1020, and a soft CAC module 1030. The illustrated soft-QoS module 1030 is operated in accordance with a connection admission control algorithm (which will be described later) and the soft-QoS control module 1020 cooperates with the satisfaction estimator 1010 in accordance with a soft-QoS control algorithm.

In Fig. 8, connection admission which is performed in the soft CAC module 1030 is based on the available capacity (Rqst, softness) 1001, the reference profile 1002, and the estimated grade-of-service (GoS). The new connection is accepted if the target GoS (GoS*) 1004 can be sustained.

Accepted connections can renegotiate their bandwidth requirements and softness during the session. For renegotiations, the soft CAC module 1030 checks that the requested bandwidth is within the limits of the declared reference profile, and informs the satisfaction estimator 1010 of connections requesting bandwidth outside their reference profile. The soft-QoS control module 1020 allocates bandwidth to renegotiation requests based on the satisfaction provided by the satisfaction estimator 1010. Herein, the connections from which bandwidth is to be reclaimed are called donors while the connection that benefits from the reallocation is called the recipient.

In this event, network-initiated renegotiation can be used to reallocate bandwidth from donor connections. For stability reasons, the satisfaction estimator 1010 can request the soft CAC module 1030 to temporary reject new connections (1012).

Algorithm for Soft-QoS Controller

The soft-QoS controller illustrated in Fig. 8 is operated in accordance with Soft-QoS control algorithm which is important in the present invention. The soft-QoS controller provided by this invention receives soft-QoS requests. It then processes QoS renegotiations based on requested bandwidth and associated softness profiles which characterize soft-QoS. Renegotiations that request a decrease of allocated bandwidth are fully granted, while requests that request an increase of bandwidth are granted only if capacity is available.

If a renegotiation request for increasing bandwidth, a preliminary allocation is made based on the available capacity at the output port of the switch where the connection is to be routed. When such a preliminary allocation will result in a satisfaction index within a preselected low satisfaction region, a reallocation algorithm is used to reclaim additional bandwidth from preexisting connections operating in the acceptable satisfaction region. The connections from which bandwidth is to be reclaimed are called donors. The connection that benefits from the reallocation is called the recipient. The reallocation algorithm uses the connections' satisfaction profiles to maximize the minimum satisfaction index of all connections subject to maintaining the satisfaction of all donors within the acceptable satisfaction region.

This optimization criteria leads to a rational allocation that considers all the connections' QoS requirements. The performance of the inventive algorithm in terms of the probability of operating at acceptable satisfaction for different network loads are the main focus of the experimental results present as part of this specification. This probability increases if the admission policy avoids relatively large renegotiation requests requiring a minimum allocation that compromise the satisfaction of on-going connections.

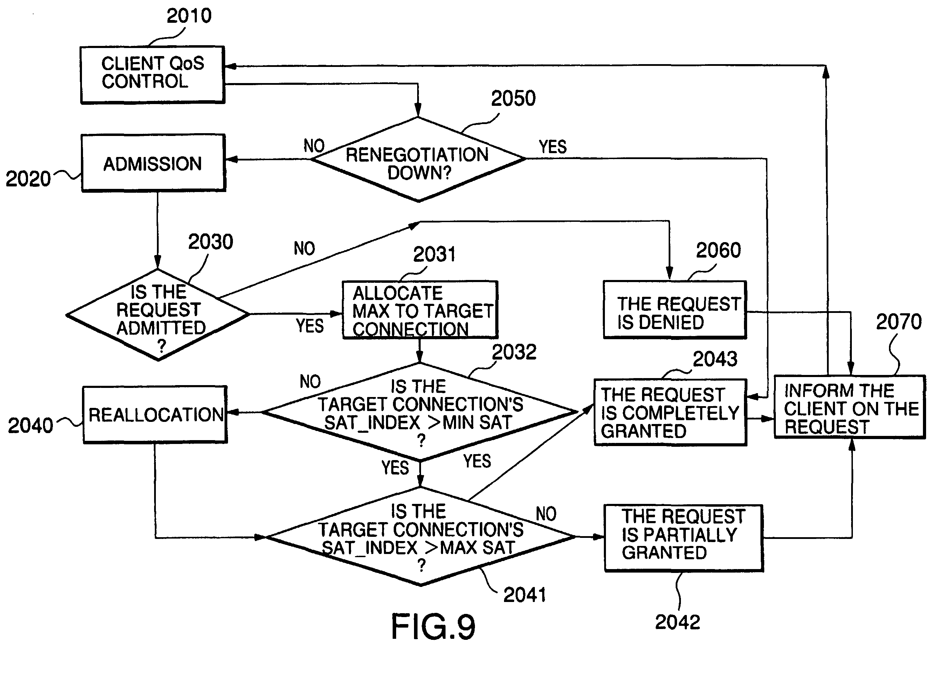

A detailed description of an algorithmic implementation for a soft-QoS controller follows. The description follows the flow chart in FIG. 9.

Step 2050 checks if the requested bandwidth is smaller than the currently allocated bandwidth for the connection (renegotiation down). If it is, the request is completely granted. Else, the connection is requesting a bandwidth increase (renegotiation up). Then, in step 2020, each new request for renegotiation up undergoes an admission test. The test heuristically estimates if at least the minimum satisfaction can be achieved for all active connections once the request is accepted using the allocated capacity and the softness profiles of active connections. Connections continue to operate with their previously allocated capacity if their request is rejected in step 2060 by the admission procedure.

Once a request is admitted in step 2030, a preliminary allocation is made in step 2031 based on the available capacity. This allocation is at least as large as the currently allocated bandwidth for the connection. Step 2032 checks that the satisfaction index obtained from the preliminary allocation is above a minimum satisfaction level. If it is, step 2041 checks if the connection achieves maximum satisfaction with the preliminary allocation. If the connection achieves maximum satisfaction, the request is fully granted in step 2043; else the request is partially granted in step 2042. When the preliminary allocation results in satisfaction index below the minimum satisfaction, the reallocation algorithm is used in step 2040 to reclaim bandwidth from connections operating above minimum satisfaction, using the connections' satisfaction profiles.

The bandwidth reallocation algorithm is invoked if a connection, V, requires more bandwidth than is available in order to achieve its minimum satisfaction level.

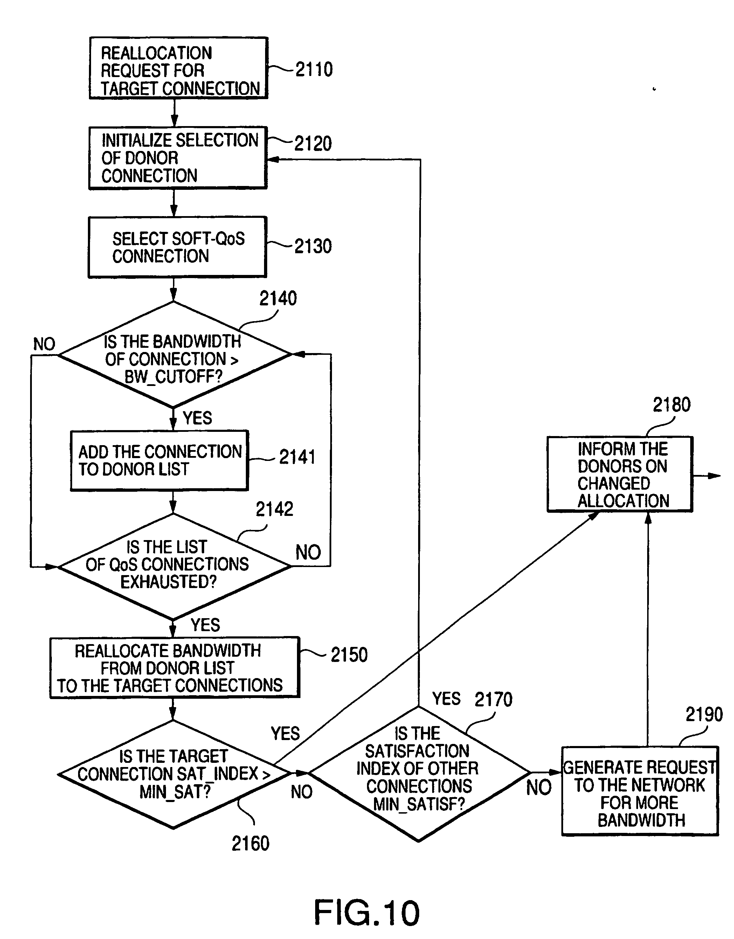

The bandwidth reallocation algorithm shown in FIG. 10 maintains the satisfaction level of all connections as high as possible. Specifically, the minimum satisfaction index of all connections has to be larger than a network selectable threshold index, min.satisfaction. Next, the operation of the core bandwidth reallocation algorithm is described. Since at a given time, connections have different satisfaction indexes, the reallocation algorithm identifies those connections that have the highest satisfaction index and the highest allocated bandwidth. Choosing connections with the highest satisfaction index as primary candidates for reallocation (donor connections) keeps the minimum satisfaction index of all active connections as high as possible.

Further, pruning the list of donor connections by selecting only connections with the highest allocated bandwidth as primary candidates for reallocation allows the network to control the number of reallocations (signalling load). This selection is determined by a pruning threshold (p). A connection is included in the list of donors if its current allocated bandwidth times the pruning threshold is larger than the bandwidth needed for the recipient. The smaller the pruning threshold, the fewer are the connections included in the donor list (if p = 0, no connections will be included), and vice versa.

Using the softness profile formulae described earlier, the reallocation algorithm calculates the amount of bandwidth that could be reallocated from the donor connections to V. In these calculations, the amount of the released bandwidth is such that the remaining bandwidth reduces the satisfaction index of the donor connections by a unit of granularity, G.

In step 2110 a reallocation is requested for a target connection. In step 2120 a selection of donor connections are initialized. In step 2130 a soft-QoS connection is selected. If the bandwidth of the selected connection is above a predetermined cutoff, the connection is added to a list of donor connections in step 2141. This is repeated in steps 2140-2142 until all QoS connections are exhausted. Some bandwidth is reallocated from the donor list in step 2150. In step 2160 the algorithm determines if the satisfaction index of the target connection is above a minimum satisfaction index. If so, the donor connections are informed of the reallocation in step 2180. If not, a second determination is made in step 2170 to see if the satisfaction index of all other connections are above minimum satisfaction. If so, the algorithm goes back to step 2120 and the procedure is repeated. If not, the algorithm requests the network for additional bandwidth in step 2190.

As a result of the core bandwidth reallocation procedure, the satisfaction index of donor connections decreases by G, while the satisfaction index of the recipient connection (V) increases. The reallocation algorithm stops when the satisfaction index of the recipient connection is within the acceptable region.

Otherwise, the core reallocation procedure is repeated until either the satisfaction index of V is in the acceptable region, or the satisfaction index of other active connections reaches min.satisfaction, the boundary between acceptable and low satisfaction regions. In the latter case, the system invokes a request for more bandwidth from the network layer.

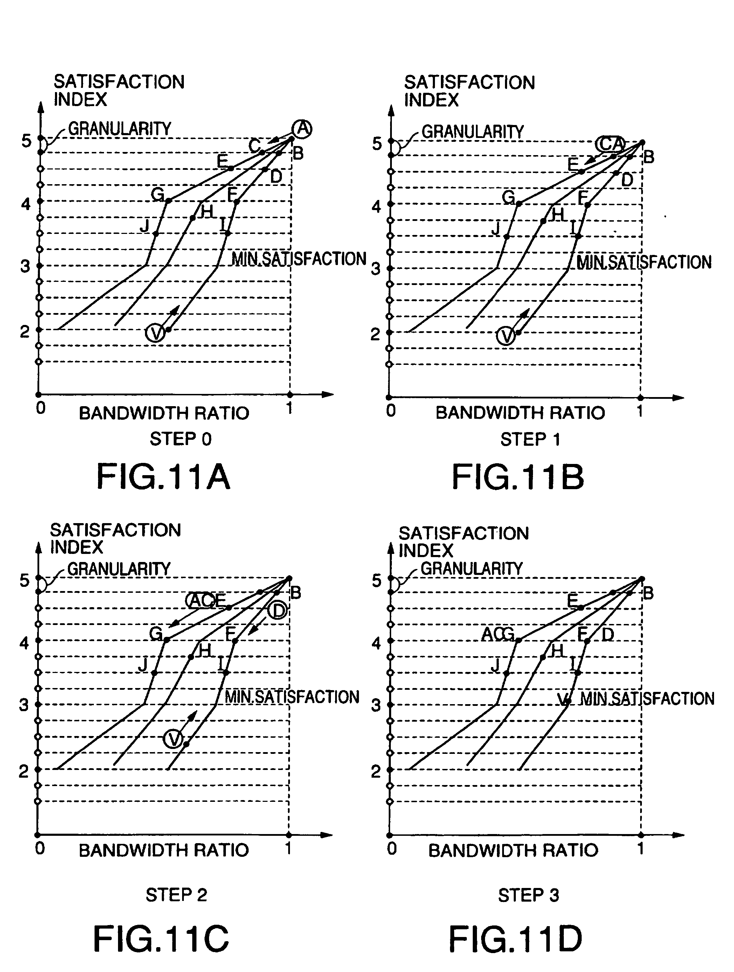

The results of the core bandwidth reallocation procedure is illustrated in FIG. 11, where 10 active connections (denoted as A, B, ... J) are displayed as dots on their respective softness profiles. For example, the satisfaction level of connection A is 5 (the maximum), the satisfaction level of connections I and J is 3.5, which is above the min.satisfaction level 3, and the satisfaction level of connection V is below the min.satisfaction. The algorithm sequentially reallocates bandwidth to connection V, in order to bring its satisfaction level above min.satisfaction.

At Step 0 (Fig. 11(a)), connection A is identified as donor connection, and part of its bandwidth, is reallocated to V. This reduces the satisfaction level of A by the granularity G, which is 0.25 in this example. It also increases the satisfaction level of V. The result is shown on Step 1 (Fig. 11(b)). In this step, the algorithm assembles the new list of donor connections, which includes A and C. The connection B is not included in the list of donor connections, its bandwidth is deemed too small for V. The result is shown on Step 2 (Fig. 11(c)). In this step, the new list of donor connections include A, C and D (E is not included for the same reasons as B on the previous step), the final result of reallocation is shown in Step 3 (Fig. 11(d)), where the satisfaction index of V is above min.satisfaction. The algorithm now adjusts the bandwidths of A, C, D and V and informs these connections of their new allocations.

Admission Control Algorithm

In order to receive soft-QoS guarantees from the network, users are required to specify a reference usage profile when they initiate a connection.

Let R(t) be the aggregate long-term capacity requirement of the connections. The goal of our soft-CAC algorithm is to guarantee that

$$LSR = Pr[R(t) > C] \leq \delta_N = LSR_{max,}$$

where $\delta_N$ is the maximum low satisfaction rate, $LSR_{max,}$ declared in the user-network contract and C is the link bandwidth.

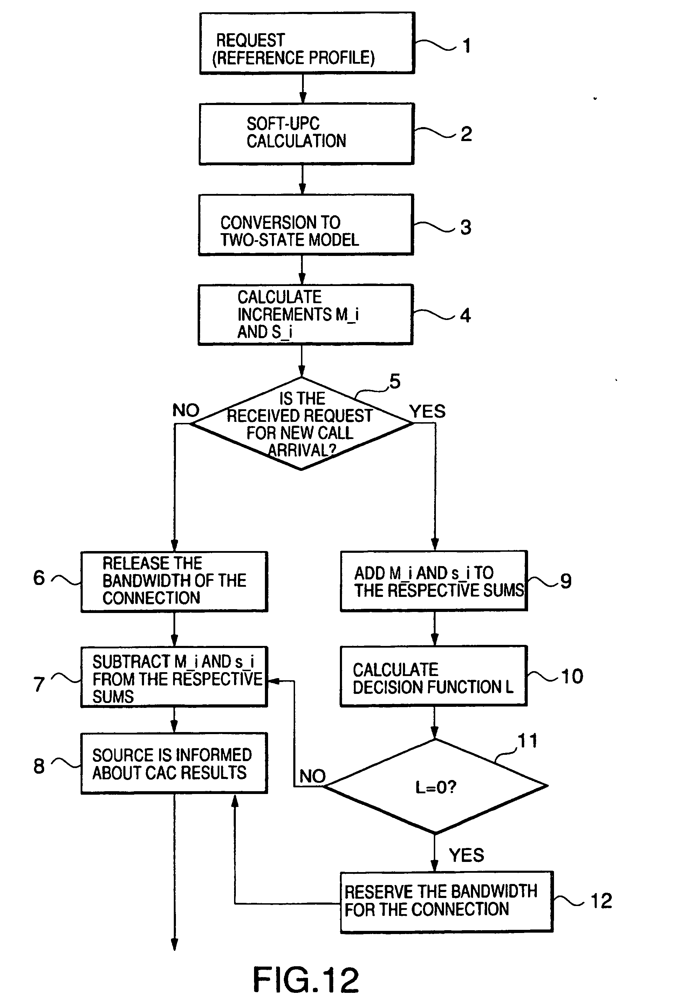

The sott-CAC algorithm depicted in FIG. 12 works in the following way. The connection advertises its reference profile in step (1) using the parameters:

$$\{R_B, \Delta_{max}, S_H^{-1}(sat_{min})\}.$$

where $R_B$ is a base-line rate, $\Delta_{max}$ is the maximum expected excursion from $R_B$ and $S_H^{-1}(sat_{min})$ is the hardest profile to be used during the session. The parameters of the reference profile can be estimated from heuristics, based on past usage patterns and/or hardware constraints.

The reference profile is converted in step (2) into soft-UPC parameters UPC = $(\lambda_p^s, \lambda_s^s, B_s^s)$ by the formulae:

$$\begin{cases} \lambda_P^S = (R_B + \Delta_{max}) \cdot S_H^{-1}(sat_{min}) \\ \lambda_S^S = R_B \cdot S_H^{-1}(sat_{min}) \\ B_S^S = \lambda_P^S \cdot T_{on} \end{cases}$$

wherein $T_{on}$ is the on period for the "on-off" rate process that models the source's bit-rate.

The soft-QoS parameters are used in step (3) to convert the system into two-state model with the high and low rates ($\lambda_H$ and $\lambda_L$) occur with probabilities $P_{on}$ and (1 - $P_{on}$) respectively, where

$$\begin{cases} \lambda_H = \min\left[1, \dfrac{T_{on}}{T_N}\right] \cdot \lambda_P^S + \left[1 - \dfrac{T_{on}}{T_N}\right]^+ \cdot \lambda_S^S, \\ \lambda_L = \left[1 - \dfrac{T_{on}}{T_N}\right]^+ \cdot \lambda_S^S, \\ P_{on} = \dfrac{T_{on}}{T_{on} + T_{off}} = \dfrac{\lambda_S^S}{\lambda_P^S} \end{cases}$$

where C and B are the link bandwidth and buffer space for VBR$^+$ connections, and the basic time interval is $T_N$ = B/(2C).

At the next step (4), the algorithm calculates the increment ($m_i$, $s_i^2$) by formulas

$$\begin{cases} m_i = R_B(i) \cdot (S_H(i))^{-1}(sat_{min}) \\ s_i^2 = (\lambda_H^S - \lambda_L^S)^2 P_{on}(1 - P_{on}) = R_B^i \Delta_{max}^i (S_H^{-1}(i)(sat_{min}))^2 \end{cases}$$

wherein

i refers to a connection,
$R_B(i)$ is a baseline rate for the connection,
$S_H^{-1}(i)(sat_{min})$ is a bandwidth ratio corresponding to $sat_{min}$,
$\lambda_H^S$ and $\lambda_L^S$ are high and low rates,
$\Delta_{max}$ is a maximum expected excursion from $R_B(i)$ and
$P_{on}$ is a probability of $\lambda_H^S$ occurring.

If the request is a cell departure (which is tested in step( 5)), the algorithm releases in step (6) the call's bandwidth and subtracts the parameters in step (7) ($m_i$, $s_i^2$) to the respective sums:

$$\begin{cases} M_R^{new} = M_R^{old} - \lambda_S^S \\ S_R^{2\ new} = S_R^{2\ old} - (\lambda_H - \lambda_L)^2 \cdot P_{on} \cdot (1 - P_{on}) \end{cases}$$

wherein

$M_R^{new}$ and $S_R^2$ new are new mean and variance
$M_R^{old}$ and $S_R^2$ old are old mean and variance
$\phi$ is a gaussian distribution function
$\delta_N$ is a maximum low satisfaction index and

C is a link bandwidth.

After that, the information regarding call release is sent in step (8) to the call originator.

Otherwise, if the request is a call arrival the algorithm adds the mean and variance in step (9) to the respective sums as follows.

$$\begin{cases} M_R^{new} = M_R^{old} + \lambda_S^s \\ S_R^{2\ new} = S_R^{2\ old} + (\lambda_H - \lambda_L)^2 \cdot P_{on} \cdot (1 - P_{on}) \end{cases}$$

and the decision function L is calculated in step (10) by the formula:

$$L = L(M_R, S_R) = \begin{cases} 0 & \text{if } M_R + S_R \phi^{-1}(1 - 2\delta_N) \leq C \\ 1 & \text{otherwise} \end{cases}$$

wherein

$M_R^{new}$ and $S_R^{2}$ new are new mean and variance
$M_R^{old}$ and $S_R^{2}$ old are old mean and variance
$\phi$ is a gaussian distribution function
$\delta N$ is a maximum low satisfaction index and
C is a link bandwidth.

The function L is used in the key decision step (11) of the CAC algorithm: if L = 0, the call is accepted and it is rejected otherwise. If the call is accepted, the bandwidth is reserved in step (12) and the source is informed in step (8). Otherwise, the parameters ($M_2$, $S_R^{2}$) are readjusted in step (7) and the source is informed in step 8 that its request is denied.

The network uses the reference profile for call admission control. Admitted users can renegotiate their bandwidth requirements and softness profiles. The network agrees to provide soft-QoS to renegotiation requests within the reference profile. A request is considered to be within the reference profile if the equivalent bandwidth associated to minimally satisfy the request is within the bounds specified in the reference profile.

Soft-QoS provision implies the allocation of bandwidth to achieve above minimum satisfaction on the softness profile, subject to constraints on global (class-wise) service parameters such as: $LSR \leq LSR_{max}$ and outage duration of at most and blocking probability $P_b \leq P_b^{max}$.

Experimental Results

In this section the performance of the proposed soft-QoS controller with VBR[+] interactive video traffic at variable network loads are evaluated. First, the experimental methodology and performance metrics used are given followed by simulation results of the controller on an ATM access switch.

Methodology

A realistic video traffic model representative of fully interactive distributed multimedia applications was developed. MPE-G2 compressed digital video was obtained using a commercially available video works product. Four 20-minute sequences of well-known action movies were used. Each sequence was encoded at five quality levels by changing the quantization scale from 4 to 12 in increments of 2. The resulting MPEG-2 frame-level bit counts were extracted from bit streams. At connection setup time, each VBR[+] source randomly selects one of the four movies. While a session is in progress, the original frame bit counts were dynamically scaled to reflect the traffic characteristics of a video server that supports interactive multimedia-on-demand (MoD) clients. The model selected interactive modes at random from uniform distribution of possible modes, such as fast-forward, rewind, play at different frame-rates, background and forward viewing, etc. An exponential distribution with an average holding times reasonable for the selected mode was used to model the sojourn time among interactive modes.

An example of a multimedia system with multiple interactivity modes is described in D. Reininger, M. Ott, G. Michelitsch and G. Welling, "Scalable QoS Control for VBR Video Servers," Proc. First IEEE Conference on Multimedia Signal Processing, Princeton University, Princeton, NJ, June 1997, and M. Ott, G. Michelitsch, G. Welling, "Adaptive QoS in Multimedia Systems", Proc. Fifth JFIP International Workshop on Quality of Service, 1 WQOS'97, Columbia University, New York, May 1997. In this system, video display windows can be moved to the foreground or background of a user interface landscape See M. Ott, G. Michelitsch, D. Reininger, G. Welling, "An Architecture for Adaptive QoS and its Application to Multimedia Systems Design," to appear in Computers and Communications, Special issue on QoS.

When a video window is at the front it selects a softer profile than when it is at the background. In addition, background video can be of lower spatial resolution than foreground one. A quality widget can be attached to a video window to allow explicit control of frame display rate, and detail (given as a combination of quantization level and spatial resolution). A remote control widget enables "trick" modes such as fast-forward, rewind, jump-to-last-frame, jump-to-first-frame, etc.

A Java-based distributed software simulation was used to multiplex a variable number of $VBR^+$ interactive MPEG video sources into the port of an ATM switch whose bandwidth allocation is managed by the soft-QoS controller. Each of the $VBR^+$ connections was implemented as a separate Java thread and a synchronously renegotiates its soft-QoS. Renegotiation messages between the connections and the soft-QoS controller consisted of a bandwidth request (given in terms of a UPC traffic descriptor) and the index of a softness profile.

The following performance metrics were used:

- ATM switch port utilization (U), measured as the ratio of average aggregated bandwidth allocated to the $VBR^+$ connections to the OC-3 link capacity.
- Low satisfaction rate (LSR), is the ratio of time (in video frame intervals of 33 msec.) an average connection spends at the low satisfaction region of its softness profile to the duration of the connection.
- Low satisfaction mean duration (LSMD), is the time (in video frame intervals of 33 msec.) and average connection spends consecutively in the low satisfaction region of its softness profile.
- Low satisfaction standard deviation (LSSD), is the standard deviation of the LSMD.
- Reallocation rate (RR), is the rate of renegotiation requests received by the soft-QoS controller that require reallocation.
- Reallocation signalling overhead (RSO), measures the ratio of signals generated to notify donors of a new allocation, resulted from the reallocation algorithm, to the number of signals generated by the connections' renegotiations.

Simulation Results

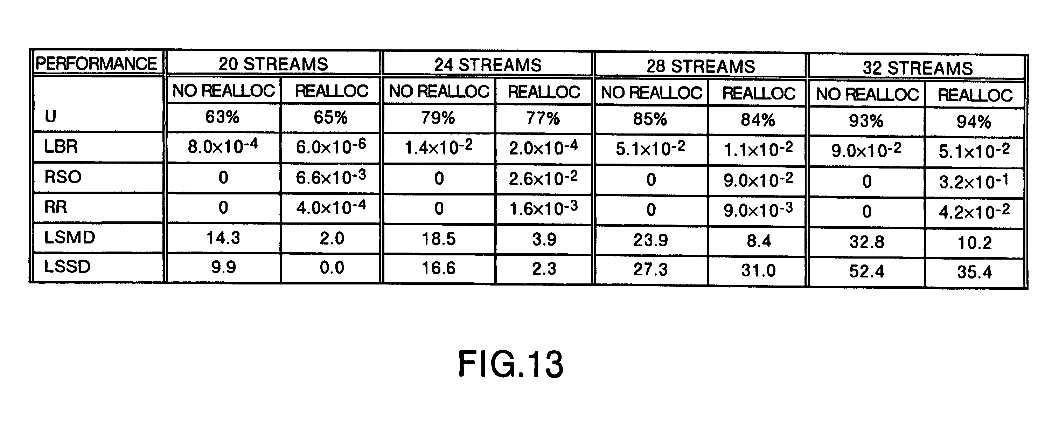

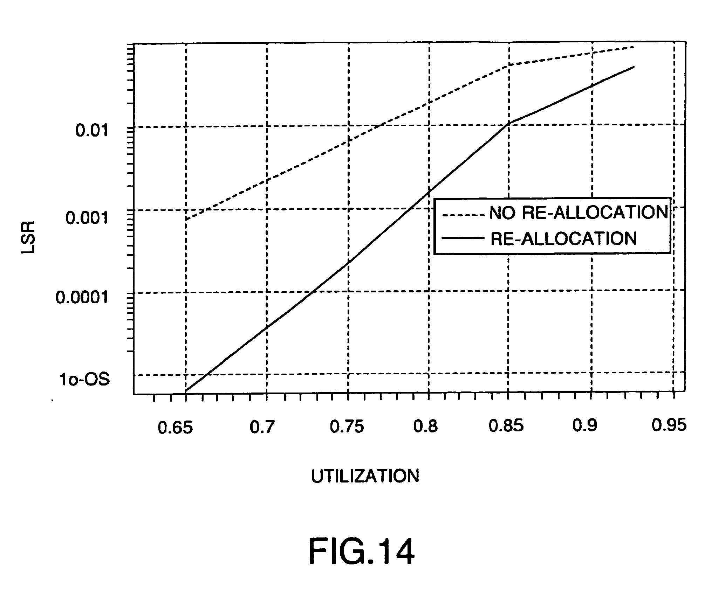

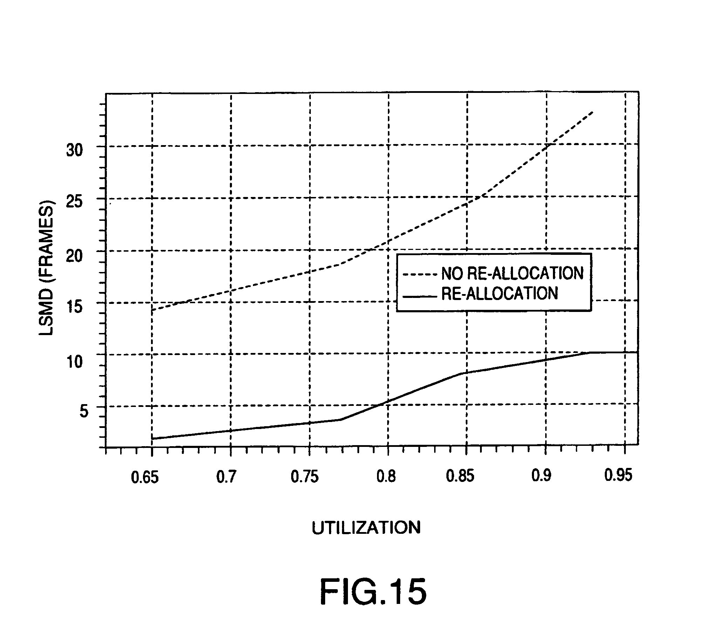

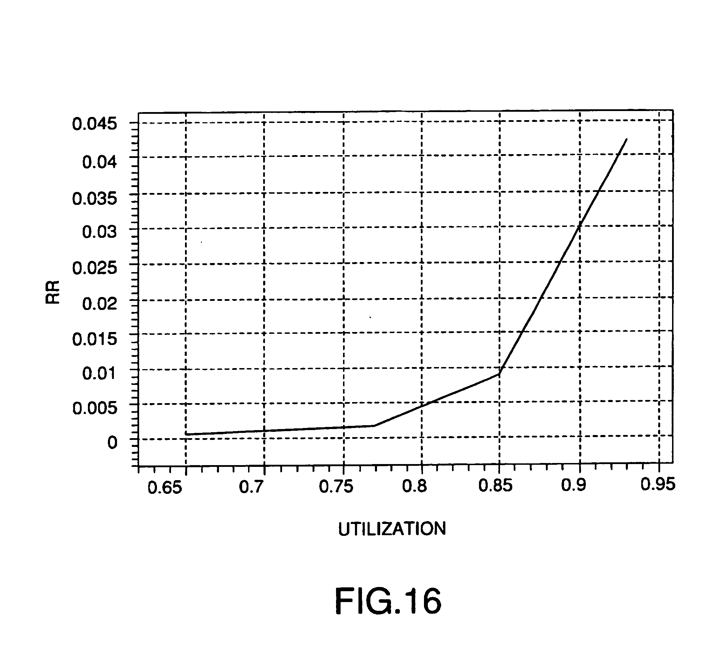

FIG. 13 depicts a table showing the performance of the soft-QoS controller in terms of the metrics described above. The simulation was run for about 20 real-time minutes (approx. 85,000 frames). When the number of interactive video streams varies from 20 to 32, the port utilization varies from 65% to 95%. Each video stream requests QoS renegotiations about once every 3 seconds on an average. Thus, the soft-QoS controller processes on the order of 10 soft-QoS requests-per-second (r.p.s.). Of these requests, less than 5% require bandwidth reallocation to avoid falling below min.satisfaction (see RR in table). As shown in FIG. 14, the soft-QoS controller can maintain acceptable quality with high probability (above 0.95) even at very high utilization regimes. In particular, note that reallocation improves LSR by about an order-of-magnitude in the 80-85% utilization regime. Also, FIG. 15 shows that the reallocation algorithm significantly reduces the time an average connection spends in the low satisfaction region. Specifically, no-reallocation and reallocation are specified by a real line and a broken line in Fig. 15, respectively. In addition, Fig. 16 shows a relationship between the port utilization and the reallocation rate (RR). The reallocation rate (RR) becomes high with an increase of the port utilization.

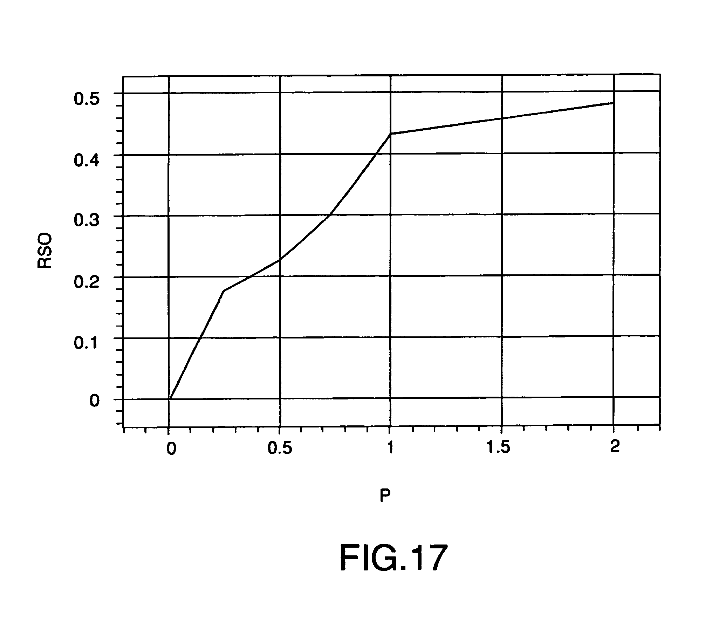

Each reallocation requires multiple signalling messages to notify the donor connections involved in the new allocation. FIG. 17 shows that the reallocation signalling overhead (RSO) added for this purpose can be above 40%. The signalling load is a function of the number of donors involved in the reallocation. As described earlier the size of the connection donors list can be controlled with the pruning threshold, p. However, the smaller the number of potential donors the smaller are the chances of the reallocation to succeed in bringing the recipient connection within the acceptable satisfaction region.

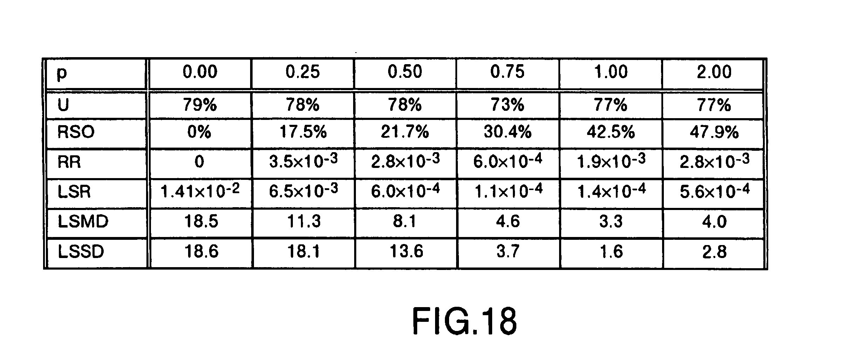

The sensitivity of the trade-off among signalling load, satisfaction index and the values of the pruning threshold are studied next. In these simulations, the number of multiplexed streams was kept constant (at 24 streams) and the pruning thresholds varied. The results are presented in FIG. 18.

As the pruning threshold (p) increases, the number of connection included into the donor group (and, correspondingly, the number of signals they generate) increases. Assuming the bandwidth allocations are randomly and uniformly distributed over some range, the dependency between p and the average size of the donor group is linear (because of linearity of the distribution function). The numbers in FIG. 17 and FIG. 18 support this conjecture: as p increases, the average signalling load, given by RSO, also increases approximately linearly up to a saturation point. The saturation point corresponds to the case where all connections are included into the donor's list.

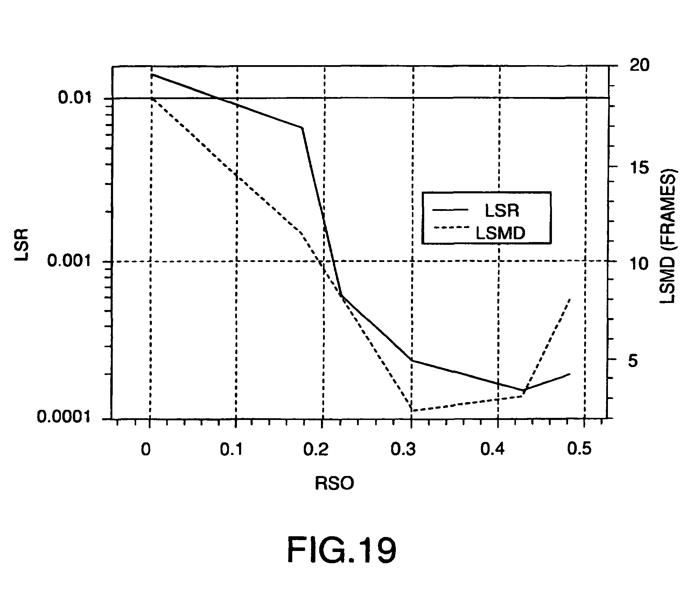

As shown in FIG. 19, while increasing p increases the signalling load, it improves the soft-QoS parameters: LSR decreases, along with LSMD and LSSD. This decrease continues until saturation point for signalling load; after the saturation point, the value of the soft-QoS parameters begin to increase. The reason is that, after the saturation point, too many donor connections are involved in reallocation, which brings the overall soft-QoS down. This analysis and the results of simulations demonstrates that the pruning threshold, p, allows to balance the signalling load and the QoS of connections, by making an appropriate tradeoff decision.

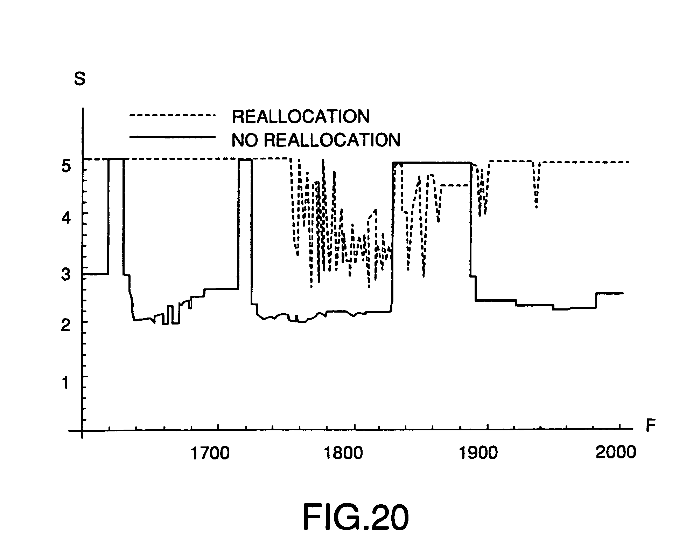

In order to visually verify that the reallocation algorithm indeed maximizes the minimum satisfaction index, the minimum satisfaction index S of all multiplexed streams was computed and plotted against five (measured in video frame periods of 33 ms.). Figure 20 shows a 500-frame snapshot of the behavior of the minimum satisfaction index S in the high utilization regime (28 streams). The figure clearly illustrates two major advantages of soft-QoS reallocations:

- the minimum satisfaction spends significantly more time at the highest level (5);
- the minimum satisfaction spends significantly less time in the low satisfaction region.

The processing requirements of the proposed soft-QoS controller produced results as follows. It was observed that about 160 renegotiations are generated per-second when the switch's port is loaded at about 80% utilization with interactive MPEG-2 video streams. In a standard configuration the controller took less than 5 msec. to process a renegotiation request. Thus, the current Java-based implementation of the controller can process more than 200 r.p. s. Considering that the renegotiation processing capacity of the switch controller can be significantly improved using a just-in-time compiler, native methods or a multiprocessor controller, it can be concluded that the soft-QoS controller can be implemented within the capabilities of currently available external switch controllers.

However, these evaluations consider only the processing requirements to compute an allocation once the negotiation request reaches the soft-QoS controller.

Conclusion

The current invention introduced soft quality-of service (soft-QoS), a novel concept that bridges the gap between the efficient provision of network-level QoS and the requirements of multimedia applications. The concept of soft-QoS provides for the implementation of a flexible and efficient bandwidth allocation scheme for adaptive multimedia applications. The bandwidth allocation is implemented within a soft-QoS controller for the VBR$^+$ ATM network service class. The performance of the soft-QoS controller for MPEG-2 interactive video over ATM with heterogeneous soft-QoS requirements.

The controller uses the connections' softness profile to compute a bandwidth allocation that maximizes the minimum satisfaction index of active connections.

Simulation results show that the satisfaction index of active connections is kept in the acceptable range, with very high probability, at high utilization regimes (80-90%), while maintaining processing requirements within the capabilities of current PC-based external switch controller. In addition, the additional signalling generated by reallocations of bandwidth during congestion can be linearly controlled through the algorithm's pruning threshold.

Although the results presented are based on softness profiles for video, the definition of soft-QoS is appropriate, for adaptive multimedia applications is general. The simulations utilize a baseline set of softness profiles. More exact softness profiles can be defined and refined as users' experience with distributed multimedia applications grows. New profiles can easily be incorporated as they become available.

**Claims**

1. A distributed multimedia system having a soft quality of service, comprising:

   a plurality of clients (710) having applications;
   a soft quality of service controller (625, 635); and
   a network (520);

   wherein the soft quality of service controller (625, 635) admits a connection from an application (660) and the network (520) and adaptively controls a bandwidth for each connection, on the basis of a satisfaction index representative of a degree of quality for each connection and a minimum satisfaction index, accepted to each connection; and wherein the connection is specified by a reference profile (1002) concerned with a bandwidth of the connection; and

wherein, when the connection is in progress, the soft quality of service controller (625, 635) processes a renegotiation request on the basis of the soft quality of service, if the renegotiation request requires a bandwidth different from the reference profile, and allocates the bandwidth required by the renegotiation request; and

wherein the soft quality of service controller (625, 635) comprises:

a soft connection admission control (CAC) module (1030) responsive to the reference profile (1002) and the renegotiation request for controlling whether or not the renegotiation request is admitted;
a satisfaction estimator (1010) for calculating a satisfaction index of the renegotiation request when the renegotiation request is admitted; and
a soft quality of service control module (1020) for allocating the bandwidth for the renegotiation request on the basis of the calculated satisfaction index and the minimum satisfaction index.

**2.** The distributed multimedia system of claim 1,
wherein the reference profile is defined by reference profile parameters, composed of a base-line rate ($R_B$), a maximum expected excursion $\Delta$max from the base-line rate $R_b$, and a profile $S_H^{-1}$ ($sat_{min}$) corresponding to the minimum satisfaction index.

**3.** The distributed multimedia system of claim 1 or 2,
wherein the soft quality of service control module (1030) allocates the bandwidth in response to the renegotiation request, by using the softness profile which is defined by the satisfaction index, representative of a degree of satisfaction and a bandwidth ratio of a requested bandwidth to an accepted bandwidth.

**4.** The distributed multimedia system of claim 3,
wherein the bandwidth ratio r is calculated by the following formula, using the softness profile:

$$r(s) = \begin{cases} C & \text{if } L = 0, \\ (s-2)/(B-C) + C & \text{if } L = 1, \\ (s-3)/(A-B) + B & \text{if } L = 2, \\ (s-4)/(1-A) + A & \text{if } L = 3, \end{cases}$$

wherein r(s) represents the bandwidth ratio;
A, B and C are three numbers that characterize bandwidth requirements of a client application and its performance requirement, wherein A, B and C are numbers smaller than 1 and are given by:

$$1 \geq A \geq B \geq C \geq 0$$

When L is given by:

$$L = \begin{cases} 0 & \text{if } 0 \leq s \leq 2, \\ 1 & \text{if } 2 \leq s \leq 3, \\ 2 & \text{if } 3 \leq s \leq 4, \\ 3 & \text{if } 4 \leq s \leq 5. \end{cases}$$

**5.** The distributed multimedia system of claim 1 or 2,
wherein said renegotiation can be invoked by a user or said network.

**6.** The distributed multimedia system of claim 1 or 2,
wherein said renegotiation is sent to network elements.

**7.** The distributed multimedia system of claim 1 or 2,

wherein said quality of service is in the form of frame rate and frame detail.

**8.** The distributed multimedia system of claim 1 or 2,
wherein said multimedia bit-rate source uses rate control to scale its bit-rate and quality.

**Patentansprüche**

**1.** Verteiltes Multimediasystem mit weicher Dienstqualität, umfassend:

eine Mehrzahl von Clients (710) mit Anwendungen;
eine Steuerung (625, 635) der weichen Dienstqualität; und
ein Netzwerk (520);

wobei die Steuerung (625, 635) der weichen Dienstqualität eine Verbindung zwischen einer Anwendung (660) und dem Netzwerk (520) zulässt und eine Bandbreite für jede Verbindung anpassbar steuert, was auf Basis eines den Qualitätsgrad für jede Verbindung wiedergebenden Güteindexes und eines von jeder Verbindung angenommenen minimalen Güteindexes erfolgt; und wobei die Verbindung durch ein Referenzprofil (1002) spezifiziert wird, das mit einer Bandbreite der Verbindung in Zusammenhang steht; und
wobei die Steuerung (625, 635) der weichen Dienstqualität, wenn die Verbindung in Betrieb ist, eine Neuverhandlungsanforderung auf Basis der weichen Dienstqualität verarbeitet, wenn die Neuverhandlungsanforderung eine von dem Referenzprofil verschiedene Bandbreite anfordert, und die durch die Neuverhandlungsanforderung angeforderte Bandbreite zuweist; und
wobei die Steuerung (625, 635) der weichen Dienstqualität umfasst:

ein eine weiche Verbindung zulassendes Steuermodul (CAC-Modul 1030), das auf das Referenzprofil (1002) und die Neuverhandlungsanforderung anspricht, um die Zulassung der Neuverhandlungsanforderung zu steuern;
einen Güteschätzer (1010) zur Berechnung eines Güteindexes der Neuverhandlungsanforderung, wenn die Neuverhandlungsanforderung zugelassen ist; und
ein Steuermodul (1020) der weichen Dienstqualität zur Zuweisung der Bandbreite für die Neuverhandlungsanforderung auf Basis des berechneten Güteindexes und des minimalen Güteindexes.

**2.** Verteiltes Multimediasystem nach Anspruch 1, bei dem das Referenzprofil durch Referenzprofilparameter festgelegt ist, die sich aus einer Grundlinienrate ($R_B$), einer maximal zu erwartenden Abweichung $\Delta$max von der Grundlinienrate $R_b$ und einem dem minimalen Güteindex entsprechenden Profil $S_H^{-1}$ ($sat_{min}$) zusammensetzen.

**3.** Verteiltes Multimediasystem nach Anspruch 1 oder 2, bei dem das Steuermodul (1030) der weichen Dienstqualität die Bandbreite in Reaktion auf die Neuverhandlungsanforderung durch Verwendung des Weichheitsprofils, das durch den Güteindex festgelegt ist, wodurch der Gütegrad wiedergegeben wird, und eines Bandbreitenverhältnisses zwischen einer angeforderten Bandbreite und einer angenommenen Bandbreite zuweist.

**4.** Verteiltes Multimediasystem nach Anspruch 3, bei dem das Bandbreitenverhältnis r unter Verwendung des Weichheitsprofils mittels der folgenden Formel berechnet wird:

$$r(s) = \begin{cases} C & \text{für } L = 0, \\ (s-2) \ / \ (B - C) + C & \text{für } L = 1, \\ (s-3) \ / \ (A - B) + B & \text{für } L = 2, \\ (s-4) \ / \ (1 - A) + A & \text{für } L = 3, \end{cases}$$

wobei
r(s) das Bandbreitenverhältnis bezeichnet;
A, B und C drei Zahlen sind, die die Bandbreitenanforderungen einer Client-Anwendung und deren Leistungsanforderung beschreiben, wobei A, B und C Zahlen kleiner 1 sind, für die $1 \geq A \geq B \geq C \geq 0$ gilt; und
L gegeben ist durch:

$$L = \begin{cases} 0 \text{ für } 0 \leq s \leq 2, \\ 1 \text{ für } 2 \leq s \leq 3, \\ 2 \text{ für } 3 \leq s \leq 4, \\ 3 \text{ für } 4 \leq s \leq 5. \end{cases}$$

**5.** Verteiltes Multimediasystem nach Anspruch 1 oder 2, bei dem die Neuverhandlung von einem Anwender oder dem Netzwerk aufgerufen werden kann.

**6.** Verteiltes Multimediasystem nach Anspruch 1 oder 2, bei dem die Neuverhandlung an Netzwerkelemente übersandt wird.

**7.** Verteiltes Multimediasystem nach Anspruch 1 oder 2, bei dem die Dienstqualität in Form von Framerate and Framedetail vorliegt.

**8.** Verteiltes Multimediasystem nach Anspruch 1 oder 2, bei dem die Multimediabitratenquelle Ratensteuerung zur Skalierung ihrer Bitrate und Qualität verwendet.

**Revendications**

**1.** Système multimédia distribué ayant une qualité de service non stricte, comprenant:

une pluralité de clients (710) ayant des applications;
un dispositif de commande de qualité de service non stricte (625, 635); et
un réseau (520);

où le dispositif de commande (625, 635) de la qualité de service non stricte admet une connexion d'une application (660) et du réseau (520) et commande, en l'adaptant, une largeur de bande pour chaque connexion, sur la base d'un indice de satisfaction représentatif d'un degré de qualité de chaque connexion et d'un indice de satisfaction minimum, accepté pour chaque connexion; et où la connexion est spécifiée par un profil de référence (1002) concerné par une largeur de bande de la connexion; et
où, lorsque la connexion progresse, le dispositif de commande de la qualité de service non stricte (625, 635) traite une demande de renégociation sur la base de la qualité de service non stricte, si la demande de renégociation requiert une largeur de bande différente du profil de référence, et attribue la largeur de bande demandée par la requête de renégociation; et
où le dispositif de commande de la qualité de service non stricte (625, 635) comprend:

un module (1030) de commande d'admission de connexion non stricte (CAC) réagissant au profil de référence (1002) et à la requête de renégociation pour établir si ou non la requête de renégociation est admise;
un organe d'estimation de satisfaction (1010) pour calculer un indice de satisfaction de la requête de renégociation lorsque la requête de renégociation est admise; et
un module (1020) de commande de qualité de service non stricte pour attribuer la largeur de bande pour la requête de renégociation sur la base de l'indice de satisfaction calculé et de l'indice de satisfaction minimum.

**2.** Système multimédia distribué selon la revendication 1, où le profil de référence est défini par des paramètres de profil de référence, constitué d'un taux de ligne de base ($R_B$), d'une excursion maximum attendue $\Delta$max du taux de ligne de base $R_b$, et d'un profil $S_H^{-1}$ (sat$_{min}$) correspondant à l'indice de satisfaction minimum.

**3.** Système multimédia distribué selon la revendication 1 ou 2, où le module (1030) de commande de la qualité de service non stricte attribue la largeur de bande en réponse à la demande de renégociation en utilisant le profil de souplesse qui est défini par l'indice de satisfaction, représentatif d'un degré de satisfaction et un rapport de largeur de bande de la largeur de bande requise à la largeur de bande acceptée.

**4.** Système multimédia distribué selon la revendication 3, où le rapport de largeur de bande r est calculé selon la formule suivante, en utilisant le profil de souplesse:

$$r(s) = \begin{cases} C & si\ L = 0, \\ (s-2)\ /\ (B-C) + C & si\ L = 1, \\ (s-3)\ /\ (A-B) + B & si\ L = 2, \\ (s-4)\ /\ (1-A) + A & si\ L = 3, \end{cases}$$

où r(s) représente le rapport de largeur de bande;

A, B et C sont trois nombres qui caractérisent les requêtes de largeur de bande d'une application client et sa requête de performance, où A, B et C sont des nombres plus petits que 1 et sont obtenus par:

$$1 \geq A \geq B \geq C \geq 0$$

Lorsque L est obtenu par:

$$L = \begin{cases} 0 & si\ 0 \leq s \leq 2, \\ 1 & si\ 2 \leq s \leq 3, \\ 2 & si\ 3 \leq s \leq 4, \\ 3 & si\ 4 \leq s \leq 5. \end{cases}$$

5. Système multimédia distribué selon la revendication 1 ou 2, où ladite renégociation peut être invoquée par un utilisateur ou ledit réseau.

6. Système multimédia distribué selon la revendication 1 ou 2, où ladite renégociation est transmise aux éléments de réseau.

7. Système multimédia distribué selon la revendication 1 ou 2, où ladite qualité de service se présente sous la forme d'un taux de trames et d'un détail de trame.

8. Système multimédia distribué selon la revendication 1 ou 2, où ladite source multimédia à débit binaire utilise une commande du taux pour mettre à l'échelle son débit binaire et sa qualité.

FIG.1

| APPLICATION | CRITICAL BANDWIDTH RATIO (B) |
|---|---|
| TELECONFERENCE, SURVEILLANCE (SLOW MOTION) | 0.2 - 0.32 |
| VIDEO-ON-DEMAND (ACTION) | 0.28 - 0.36 |
| MULTIMEDIA-ON-DEMAND (INTERACTIVE ACTION) | 0.32 - 0.48 |

# FIG. 2

EP 0 932 280 B1

SCALING

APPLICATION ~500

~505

AVAILABLE QoS
535

APP. LEVEL QoS rqst

(VARIES WITH USER ACTIONS)

NIC ~510

QoS CONTROL

515

AVAILABLE NET QoS

NETWORK QoS rqst

525

(NOT ONCE AT CONN. SETUP, BUT DYNAMIC)

NETWORK ~520

FIG.3

FIG.4

APPLICATION QoS RENEGOTIATION

720

745
QoS CONTROLLER
741

735
QoS CONTROLLER

710

MODIFY_AVAIL (QoS, ...)
723
QoS rqst   742   QoS avail

731

CONNECT (QoS, ...)
724

SETUP (QoS, ...) 722

MODIFY_REQ (QoS, ...)

721

SERVER

740
ATM SWITCH

730
ATM SWITCH

CLIENT

FIG.5

EP 0 932 280 B1

APPLICATION QoS RENEGOTIATION

FIG.6

EP 0 932 280 B1

APPLICATION QoS RENEGOTIATION

FIG.7

EP 0 932 280 B1

FIG.8

EP 0 932 280 B1

FIG.9

REALLOCATION REQUEST FOR TARGET CONNECTION ——2110

INITIALIZE SELECTION OF DONOR CONNECTION ——2120

SELECT SOFT-QoS CONNECTION ——2130

2140
IS THE BANDWIDTH OF CONNECTION > BW_CUTOFF?

NO

YES

ADD THE CONNECTION TO DONOR LIST ——2141

2142
IS THE LIST OF QoS CONNECTIONS EXHAUSTED?

NO

YES

REALLOCATE BANDWIDTH FROM DONOR LIST TO THE TARGET CONNECTIONS ——2150

2160
IS THE TARGET CONNECTION SAT_INDEX > MIN_SAT?

YES

NO

2170
IS THE SATISFACTION INDEX OF OTHER CONNECTIONS MIN_SATISF?

YES

NO

INFORM THE DONORS ON CHANGED ALLOCATION ——2180

GENERATE REQUEST TO THE NETWORK FOR MORE BANDWIDTH ——2190

FIG.10

FIG.11A

STEP 0

FIG.11B

STEP 1

FIG.11C

STEP 2

FIG.11D

STEP 3

```
        ┌─────────────────────────┐
        │  REQUEST                 │        1
        │  (REFERENCE PROFILE)     │
        └─────────────────────────┘
                    │
                    ▼
        ┌─────────────────────────┐
        │  SOFT-UPC                │        2
        │  CALCULATION             │
        └─────────────────────────┘
                    │
                    ▼
        ┌─────────────────────────┐
        │  CONVERSION TO           │        3
        │  TWO-STATE MODEL         │
        └─────────────────────────┘
                    │
                    ▼
        ┌─────────────────────────┐
        │  CALCULATE               │
        │  INCREMENTS M_i          │        4
        │  AND S_i                 │
        └─────────────────────────┘
```

5 — IS THE RECEIVED REQUEST FOR NEW CALL ARRIVAL?

NO ← → YES

6 — RELEASE THE BANDWIDTH OF THE CONNECTION

9 — ADD $M\_i$ AND $s\_i$ TO THE RESPECTIVE SUMS

7 — SUBTRACT $M\_i$ AND $s\_i$ FROM THE RESPECTIVE SUMS

10 — CALCULATE DECISION FUNCTION L

8 — SOURCE IS INFORMED ABOUT CAC RESULTS

11 — L=0?

NO

YES

12 — RESERVE THE BANDWIDTH FOR THE CONNECTION

# FIG.12

| PERFORMANCE | 20 STREAMS | | 24 STREAMS | | 28 STREAMS | | 32 STREAMS | |
|---|---|---|---|---|---|---|---|---|
| | NO REALLOC | REALLOC | NO REALLOC | REALLOC | NO REALLOC | REALLOC | NO REALLOC | REALLOC |
| U | 63% | 65% | 79% | 77% | 85% | 84% | 93% | 94% |
| LBR | $8.0 \times 10^{-4}$ | $6.0 \times 10^{-6}$ | $1.4 \times 10^{-2}$ | $2.0 \times 10^{-4}$ | $5.1 \times 10^{-2}$ | $1.1 \times 10^{-2}$ | $9.0 \times 10^{-2}$ | $5.1 \times 10^{-2}$ |
| RSO | 0 | $6.6 \times 10^{-3}$ | 0 | $2.6 \times 10^{-2}$ | 0 | $9.0 \times 10^{-2}$ | 0 | $3.2 \times 10^{-1}$ |
| RR | 0 | $4.0 \times 10^{-4}$ | 0 | $1.6 \times 10^{-3}$ | 0 | $9.0 \times 10^{-3}$ | 0 | $4.2 \times 10^{-2}$ |
| LSMD | 14.3 | 2.0 | 18.5 | 3.9 | 23.9 | 8.4 | 32.8 | 10.2 |
| LSSD | 9.9 | 0.0 | 16.6 | 2.3 | 27.3 | 31.0 | 52.4 | 35.4 |

# FIG.13

FIG.14

FIG.15

FIG.16

FIG.17

| p | 0.00 | 0.25 | 0.50 | 0.75 | 1.00 | 2.00 |
|---|---|---|---|---|---|---|
| U | 79% | 78% | 78% | 73% | 77% | 77% |
| RSO | 0% | 17.5% | 21.7% | 30.4% | 42.5% | 47.9% |
| RR | 0 | $3.5\times10^{-3}$ | $2.8\times10^{-3}$ | $6.0\times10^{-4}$ | $1.9\times10^{-3}$ | $2.8\times10^{-3}$ |
| LSR | $1.41\times10^{-2}$ | $6.5\times10^{-3}$ | $6.0\times10^{-4}$ | $1.1\times10^{-4}$ | $1.4\times10^{-4}$ | $5.6\times10^{-4}$ |
| LSMD | 18.5 | 11.3 | 8.1 | 4.6 | 3.3 | 4.0 |
| LSSD | 18.6 | 18.1 | 13.6 | 3.7 | 1.6 | 2.8 |

# FIG.18

FIG.19

**FIG.20**